# EUROPÄISCHE PATENTSCHRIFT

(11) **EP 4 283 179 B1**
(45) Veröffentlichungstag und Bekanntmachung des Hinweises auf die Patenterteilung: **11.09.2024**
(21) Anmeldenummer: 23169589.1
(22) Anmeldetag: 24.04.2023
(51) Int. Cl.: F16P 3/14, F16P 3/08

(54) **SICHERHEITSZUHALTUNG**
SAFETY LOCKING DEVICE
VERROUILLAGE DE SÉCURITÉ

(30) Priorität: 24.05.2022 DE 102022113080
(43) Veröffentlichungstag der Anmeldung: 29.11.2023
(73) Patentinhaber: SICK AG, 79183 Waldkirch (DE)
(72) Erfinder: Schunke, Stefan, 79102 Freiburg (DE)
(74) Vertreter: Manitz Finsterwald Patent- und Rechtsanwaltspartnerschaft mbB

(56) Entgegenhaltungen:
- US-A1- 2016 371 908

## Beschreibung

Die Erfindung betrifft eine Sicherheitszuhaltung für eine beweglich trennende Schutzeinrichtung zum Absichern einer Maschine und einen Verbund mit einer solchen Sicherheitszuhaltung und einer Sicherheitssteuerungsvorrichtung und ein Verfahren zum Absichern einer Maschine mittels einer beweglich trennenden Schutzeinrichtung.

Für die Zugangsabsicherung von mit Zäunen abgesicherten gefahrbringenden Maschinen werden in der Regel Sicherheitszuhaltungen eingesetzt. Bei größeren Maschinen sind diese nicht selten als Türsysteme ausgeprägt, d.h. sie verfügen neben der Komponente "Sicherheitszuhaltung" auch über einen Not-Halt-Taster, weitere Bedientasten und ggf. auch einen Türgriff sowie eine Fluchtentriegelung. Werden besonders große oder komplexe Anlagen abgesichert steigt die Anzahl der Bedientasten an solchen Türsystemen nicht selten auf drei und mehr. Das ist notwendig, weil direkt an der Tür unterschiedliche Funktionen ansteuerbar sein sollen, die den Zugang oder die Maschinenbetriebsart betreffen, z.B. Stoppanforderung der Maschine, Start des Einrichtbetriebs, Wiederanlauf der Maschine, Neustart usw. Mit steigender Anzahl an Tasten steigt die Größe des Gehäuses der Sicherheitszuhaltung bzw. des Türsystems. Es steigen außerdem die Kosten und die Wahrscheinlichkeit einer Fehlbedienung. Auch die Komplexität der Verkabelung (im Falle von fest-verdrahteten Tasten) nimmt zu. Ein Umbau der Anlage, der beispielsweise einhergeht mit dem Tausch der gefahrbringenden Maschinen, führt häufig auch zu einer notwendigen Umrüstung der Sicherheitszuhaltungen bzw. den Türsystemen. Je nach Einsatzumgebung können sich außerdem die Tasten einer herkömmlichen Sicherheitszuhaltung bzw. Türsystems schnell abnützen. Eine Sicherheitszuhaltung ist beispielsweise aus der DE 10 2008 060 004 B4 bekannt. Diese umfasst eine Vielzahl von Eingabeelementen. Damit gehen die oben beschriebenen Nachteile einher.

Die US 2016/371908 A1 beschreibt ein Verriegelungssystem, welches es einem Benutzer erlaubt, ein virtuelles Schloss an einer Verriegelungsvorrichtung anzubringen, damit ein Roboter, der sich in einem Bereich bewegt, der durch das Verriegelungssystem abgesichert wird, nicht gestartet werden kann. Das virtuelle Schloss kann durch ein Eingabegerät angebracht werden.

Es ist daher die Aufgabe eine Sicherheitszuhaltung zu schaffen die flexibler einsatzbar ist.

Die Aufgabe wird durch die Sicherheitszuhaltung für eine beweglich trennende Schutzeinrichtung zum Absichern einer Maschine gemäß dem unabhängigen Anspruch 1 gelöst. In Anspruch 6 wird ein Verbund beschrieben, der eine solche Sicherheitszuhaltung und eine Sicherheitssteuerungsvorrichtung beinhaltet. Anspruch 14 beschreibt ein Verfahren zum Absichern einer Maschine mittels einer beweglich trennenden Schutzeinrichtung und einer solchen Sicherheitszuhaltung. Die Ansprüche 2 bis 5 beschreiben erfindungsgemäße Weiterbildungen der Sicherheitszuhaltung, wohingegen die Ansprüche 7 bis 13 erfindungsgemäße Weiterbildungen des Verbunds beschreiben. Der Anspruch 15 beschreibt eine erfindungsgemäße Weiterbildung des Verfahrens.

Die erfindungsgemäße Sicherheitszuhaltung wird insbesondere für eine beweglich trennende Schutzeinrichtung (zum Beispiel ein Tor, Tür, Klappe oder dergleichen) verwendet, um eine (gefahrbringende) Maschine absichern zu können. Bei der Maschine kann es sich beispielsweise um einen Roboter und insbesondere um einen Schweißroboter handeln, der beispielsweise in einer Produktionsstraße eingesetzt wird. Die Sicherheitszuhaltung ist dazu ausgebildet, um mit einer Sicherheitssteuerungsvorrichtung zu kommunizieren. Die Sicherheitszuhaltung ist mit der Sicherheitssteuerungsvorrichtung vorzugsweise über eine Kabelanordnung verbunden. Die Kabelanordnung umfasst vorzugsweise ein oder mehrere Kabel bzw. Leiter. Ist die beweglich trennende Schutzeinrichtung geöffnet, so soll die Maschine bevorzugt in einen Stopp-Betriebsmodus übergehen. Die Sicherheitszuhaltung umfasst außerdem zumindest ein erstes Funkmodul, welches sich zur berührungslosen Kommunikation mit einem tragbaren Bediengerät (zum Beispiel Mobiltelefon (Smartphone), Tablet-Computer, Laptop-Computer, Smartwatch) eignet. Die Sicherheitszuhaltung ist dazu ausgebildet, um einen, aus mehreren auswählbaren Befehlen, ausgewählten Befehl von dem tragbaren Bediengerät berührungslos zu empfangen und an die Sicherheitssteuerungsvorrichtung zu übertragen.

Dadurch können Tasten in der Sicherheitszuhaltung eingespart werden und die Sicherheitszuhaltung kann, durch Einsatz eines entsprechenden Funkmoduls, sehr flexibel eingesetzt werden. Wird die Sicherheitszuhaltung in einer anderen Umgebung eingesetzt, so empfängt diese über das Funkmodul die jeweiligen, für diese Umgebung passenden Befehle, die sie an die Sicherheitssteuerungsvorrichtung weiterleitet. Dies erlaubt neben einem kompakteren Aufbau der Sicherheitszuhaltung auch eine sehr flexible Anwendung.

Bevorzugt ist die Sicherheitszuhaltung dazu ausgebildet, um mit der Sicherheitssteuerungsvorrichtung über eine sichere Kommunikationsschnittstelle wie z.B. PROFINET/PROFlsafe oder IO-Link Safety zu kommunizieren.

Gemäß einer vorteilhaften Ausführungsform ist die Sicherheitszuhaltung dazu ausgebildet, um einen oder mehrere (mögliche) ausführbare Befehle von der Sicherheitssteuerungsvorrichtung zu empfangen und an das tragbare Bediengerät berührungslos zu übertragen. Dies bringt den Vorteil mit sich, dass ein Benutzer, der das tragbare Bediengerät mit sich führt, eine Liste mit möglichen ausführbaren Befehlen auf das Bediengerät übertragen bekommt. Aus diesen Befehlen kann der Benutzer dann zumindest einen Befehl auswählen, der durch die Sicherheitszuhaltung wiederum an die Sicherheitssteuerungsvorrichtung übertragen und von dieser ausgeführt wird. Ein Austausch der Sicherheitszuhaltung durch eine andere Sicherheitszuhaltung mit einer anderen Anzahl an Tastern ist daher nicht notwendig.

Gemäß einer anderen vorteilhaften Ausführungsform ist die Sicherheitszuhaltung dazu ausgebildet, um eine Authentifizierungsinformation von dem tragbaren Bediengerät berührungslos zu empfangen und an die Sicherheitssteuerungsvorrichtung weiterzuleiten. Bei der Authentifizierungsinformation kann es sich beispielsweise um ein durch den Benutzer aufgenommenes Selbstportrait ("Selfie") handeln, welches der Benutzer mit dem tragbaren Bediengerät aufgenommen hat. Es kann sich auch um einen Fingerabdruck oder einen Teil eines Fingerabdrucks handeln, der mit dem tragbaren Bediengerät aufgenommen wurde. Es kann sich auch um eine PIN handeln, die der Benutzer über das tragbare Bediengerät eingegeben hat. Die Authentifizierungsinformation kann auch ein Benutzername oder schlichtweg die Information sein, dass die Authentifizierung erfolgreich verlaufen ist. Zur Authentifizierung des Benutzers könnte die Sicherheitssteuerungsvorrichtung die Authentifizierungsinformation an eine Authentifizierungsvorrichtung weiterleiten. Die Authentifizierung könnte auch direkt in der Sicherheitssteuerungsvorrichtung, der Sicherheitszuhaltung oder sogar im tragbaren Bediengerät vorgenommen werden. Die Authentifizierung findet insbesondere über einen Vergleich der Authentifizierungsinformation mit einem entsprechenden gespeicherten Wert statt.

Gemäß einer weiteren vorteilhaften Ausführungsform ist das erste Funkmodul ein NFC-Funkmodul. Die Kommunikation findet daher in unmittelbarer Umgebung (vorzugsweise in einem Bereich von weniger als 10 m, 8 m, 5 m, 3 m, 1 m oder weniger als 0,5 m oder 0,2 m) zur Sicherheitszuhaltung statt. Die Sicherheitszuhaltung ist vorzugsweise frei von einem WLAN-Modul und/oder einem Mobilfunkmodul. Beispielsweise kann die Kommunikation zwischen der Sicherheitszuhaltung und dem tragbaren Bediengerät über Bluetooth^{®}, ZigBee^{®} oder RFID erfolgen. Dadurch ist sichergestellt, dass der Benutzer ausgewählte Befehle lediglich an diejenige Sicherheitszuhaltung übermittelt, vor welcher er sich gerade befindet. Umgekehrt empfängt der Benutzer lediglich (mögliche) ausführbare Befehle von derjenigen Sicherheitszuhaltung, vor welcher er sich gerade befindet.

Gemäß einer weiteren vorteilhaften Ausführungsform umfasst die Sicherheitszuhaltung ein RFID-Tag, wobei das erste Funkmodul oder ein zweites Funkmodul der Sicherheitszuhaltung dazu ausgebildet ist, Daten von dem RFID-Tag zu empfangen, wenn die beweglich trennende Schutzeinrichtung geschlossen ist. Die Sicherheitszuhaltung ist dann dazu ausgebildet, um den geschlossenen Zustand der beweglich trennenden Schutzeinrichtung an die Sicherheitssteuerungsvorrichtung zu übertragen. Die Sicherheitszuhaltung wäre ergänzend oder alternativ auch dazu ausgebildet, um den geöffneten Zustand der beweglich trennenden Schutzeinrichtung (also wenn keine Daten von dem RFID-Tag empfangen werden) an die Sicherheitssteuerungsvorrichtung zu übertragen. Das RFID-Tag ist bevorzugt beweglich und damit "mitfahrend" an der beweglich trennenden Schutzeinrichtung angeordnet, wohingegen der übrige Teil der Sicherheitszuhaltung stationär angeordnet ist. Vorzugsweise ist ein Sperrglied ebenfalls mitfahrend an der beweglich trennenden Schutzeinrichtung angeordnet, wobei das Sperrglied im geschlossenen Zustand der Schutzeinrichtung in eine Öffnung in der Sicherheitszuhaltung eingreift und in dieser bevorzugt durch ein Verriegelungselement, insbesondere in Form eines Bolzens, verriegelt wird. Die Sicherheitssteuerungsvorrichtung wäre in diesem Fall bevorzugt dazu ausgebildet, um die zumindest eine abzusichernde Maschine derart anzusteuern, dass diese nur dann aktiviert wird, wenn die beweglich trennende Schutzeinrichtung geschlossen ist. Ist die beweglich trennende Schutzeinrichtung geöffnet, so wäre die Sicherheitssteuerungsvorrichtung bevorzugt dazu ausgebildet, um die abzusichernde Maschine derart anzusteuern, dass diese außer Betrieb ist.

Der erfindungsgemäße Verbund umfasst die Sicherheitszuhaltung und die Sicherheitssteuerungsvorrichtung. Die Sicherheitssteuerungsvorrichtung ist dazu ausgebildet, um den ausgewählten Befehl zu empfangen und auszuführen. Die Sicherheitssteuerungsvorrichtung ist weiterhin dazu ausgebildet, um in Abhängigkeit des ausgeführten Befehls zumindest einen aktuell ausführbaren Befehl an die Sicherheitszuhaltung zu übertragen, wobei die Sicherheitszuhaltung dazu ausgebildet ist, um diesen zumindest einen weiteren aktuell ausführbaren Befehl an das tragbare Bediengerät berührungslos zu übertragen. Dadurch aktualisieren sich die auf dem tragbaren Bediengerät angezeigten ausführbaren Befehle, die der Benutzer auswählen kann. Wählt der Benutzer beispielsweise den Befehl "Maschinenstopp" aus, so wird dieser Befehl über die Sicherheitszuhaltung zu der Sicherheitssteuerungsvorrichtung übertragen. Diese führt den Befehl aus und übersendet im Anschluss den zumindest einen weiteren aktuell ausführbaren Befehl. So ist es dann möglich, dass der Benutzer auf seinem tragbaren Bediengerät den Befehl "Maschinenstart" angezeigt bekommt. Es ist besonders vorteilhaft, dass lediglich aktuell ausführbare Befehle an die Sicherheitszuhaltung übertragen werden, die diese wiederum an das tragbare Bediengerät weiterleitet. Dadurch bekommt der Benutzer lediglich aktuell gültige Befehle angezeigt.

Gemäß einer weiteren vorteilhaften Ausführungsform des Verbunds ist die Sicherheitssteuerungsvorrichtung dazu ausgebildet, um eine Zulässigkeit des empfangenen ausgewählten Befehls zu überprüfen. Der empfangene ausgewählte Befehl wird nur dann ausgeführt, wenn dieser zulässig ist. Beispielsweise könnte es sein, dass ein Benutzer mögliche ausführbare Befehle angezeigt bekommt, von denen er einen auswählt, wobei gleichzeitig ein Taster der Sicherheitszuhaltung betätigt wird, der die Sicherheitssteuerungsvorrichtung in einen Zustand bringt, in welchem der ausgewählte Befehl nicht ausgeführt werden kann. In einem solchen Fall würde beispielsweise ein ausgewählter Befehl als unzulässig eingestuft werden.

Gemäß einer weiteren vorteilhaften Ausführungsform des Verbunds ist die Sicherheitssteuerungsvorrichtung dazu ausgebildet, um je nach empfangener Authentifizierungsinformation des tragbaren Bediengeräts unterschiedliche ausführbare Befehle an die Sicherheitszuhaltung zu übertragen. Die Sicherheitszuhaltung ist selbst dazu ausgebildet, diese jeweiligen möglichen ausführbaren Befehle an das tragbare Bediengerät berührungslos weiterzuleiten. Dadurch können unterschiedliche Benutzer unterschiedliche Befehle angezeigt bekommen. So könnte beispielsweise jedem Benutzer ein Befehl für einen "Maschinenstopp" übermittelt werden, damit dieser Benutzer in einer Gefahrensituation die Maschine ausschalten kann. Dagegen soll das Anschalten der Maschine nur bestimmten Benutzern vorbehalten werden. So kann spezielle Benutzer geben, denen beispielsweise der Befehl für den "Maschinenstart" angezeigt wird.

Gemäß einer weiteren vorteilhaften Ausführungsform des Verbunds umfasst der Verbund zumindest ein tragbares Bediengerät. Das tragbare Bediengerät ist dazu ausgebildet, um berührungslos mit der Sicherheitszuhaltung zu kommunizieren. Das tragbare Bediengerät ist weiter dazu ausgebildet, um ausführbare Befehle von der Sicherheitszuhaltung zu empfangen und einem Benutzer darzustellen. Dieses "Darstellen" erfolgt vorzugsweise visuell auf einem (vorzugsweise berührungsempfindlichen) Bildschirm. Das "Darstellen" könnte allerdings auch durch eine akustische Information erfolgen.

Gemäß einer weiteren vorteilhaften Ausführungsform des Verbunds ist das tragbare Bediengerät dazu ausgebildet, um eine Auswahl eines Befehls durch eine Eingabe eines Benutzers zu erfassen und um den ausgewählten Befehl an die Sicherheitszuhaltung berührungslos zu übertragen. Dieses "Erfassen" erfolgt bevorzugt durch Detektion einer Berührung des berührungsempfindlichen Bildschirms des tragbaren Bediengeräts. Das "Erfassen" könnte beispielsweise auch durch Betätigung eines entsprechenden Knopfes oder Tasters am tragbaren Bediengerät erfolgen. Ebenfalls könnte das "Erfassen" über eine Spracherkennung erfolgen.

Gemäß einer weiteren vorteilhaften Ausführungsform des Verbunds ist das tragbare Bediengerät dazu ausgebildet, um eine Authentifizierungsinformation von dem Benutzer zu erstellen und diese Authentifizierungsinformation an die Sicherheitszuhaltung berührungslos zu übertragen. Je nach Sicherheitszuhaltung könnte eine entsprechende Aufforderung zur Erstellung einer Authentifizierungsinformation vorausgehen. Beispielsweise wäre es denkbar, dass der Befehl "Maschinenstopp" allen Benutzern, also auch solchen, die keine Authentifizierungsinformation an die Sicherheitszuhaltung und damit an die Sicherheitssteuerungsvorrichtung übermittelt haben, angezeigt wird. Weitere Befehle könnten lediglich denjenigen Benutzern angezeigt werden, die eine Authentifizierungsinformation an die Sicherheitszuhaltung und damit an die Sicherheitssteuerungsvorrichtung übermittelt haben und die dadurch authentifiziert werden konnten.

Gemäß einer weiteren vorteilhaften Ausführungsform des Verbunds umfasst der Verbund ein Türsystem, wobei das Türsystem die Sicherheitszuhaltung umfasst. Das Türsystem umfasst außerdem ein Hauptmodul mit zumindest einem Taster und ein Griffmodul mit einem Türgriff. Das Hauptmodul ist vorzugsweise stationär angeordnet, wohingegen das Griffmodul "mitfahrend" an der beweglich trennenden Schutzeinrichtung angeordnet ist. Bei dem Taster handelt es sich vorzugsweise um einen Not-Halt-Taster, um die Maschine anhalten zu können. Vorzugsweise umfasst das Türsystem lediglich genau zwei oder einen Taster. Bei zwei Tastern können z.B. ein Not-Halt-Taster und ein Rest-Taster vorgesehen sein. Grundsätzlich kann das Türsystem und/oder das Hauptmodul auch gar keine Taste / keinen Taster aufweisen. Ein Taster kann auch lediglich auf einem Display angezeigt werden.

Gemäß einer weiteren vorteilhaften Ausführungsform des Verbunds sind das Türsystem und die Sicherheitssteuerungsvorrichtung in einem gemeinsamen Gehäuse angeordnet. Dadurch ist ein sehr kompakter Aufbau möglich.

Das erfindungsgemäße Verfahren zum Absichern einer Maschine mittels einer beweglich trennenden Schutzeinrichtung umfasst die nachfolgenden Verfahrensschritte. In einem ersten Verfahrensschritt wird das tragbare Bediengerät mit einer Sicherheitszuhaltung bzw. einem Türsystem mit einer solchen Sicherheitszuhaltung gekoppelt. Unter dem Wortlaut "Koppeln" wird insbesondere verstanden, dass eine Möglichkeit zur Datenübertragung zwischen dem tragbaren Bediengerät und der Sicherheitszuhaltung bzw. dem Türsystem mit der Sicherheitszuhaltung eingerichtet, also hergestellt wird. In einem zweiten Verfahrensschritt werden mögliche ausführbare Befehle an das tragbare Bediengerät (berührungslos) übertragen. In einem dritten Verfahrensschritt wird ein (von einem Benutzer) auf dem tragbaren Bediengerät, aus mehreren auswählbaren Befehlen, ausgewählter Befehl von dem tragbaren Bediengerät an die Sicherheitszuhaltung bzw. an das Türsystem mit der Sicherheitszuhaltung (berührungslos) übertragen. In einem vierten Verfahrensschritt wird der ausgewählte Befehl von der Sicherheitszuhaltung bzw. von dem Türsystem mit der Sicherheitszuhaltung an eine Sicherheitssteuerungsvorrichtung übertragen. In einem fünften Verfahrensschritt wird der ausgewählte Befehl durch die Sicherheitssteuerungsvorrichtung ausgeführt. Besonders vorteilhaft ist, dass der Benutzer keinen Taster an der Sicherheitszuhaltung bzw. an dem Türsystem mit der Sicherheitszuhaltung drücken muss. Dadurch wäre es auch denkbar, dass die Sicherheitszuhaltung bezogen auf die Körpergröße des Benutzers in einer höheren oder niedrigeren Position angebracht wird.

Gemäß einer weiteren vorteilhaften Ausführungsform des Verfahrens wird in einem sechsten Verfahrensschritt festgestellt, welcher zumindest eine Befehl nach Ausführung des ausgewählten Befehls aktuell ausführbar ist. Für den Fall, dass der Befehl "Maschinenstopp" ausgeführt wurde, kann dieser Befehl nicht unmittelbar erneut ausgeführt werden. So könnte beispielsweise festgestellt werden, dass der Befehl "Maschinenstart" und/oder "Maschinenreset" ausführbar wäre. In einem siebten Verfahrensschritt wird dieser zumindest eine aktuell ausführbare Befehl an die Sicherheitszuhaltung übertragen. Dies erfolgt durch die Sicherheitssteuerungsvorrichtung. Im Anschluss daran wird der zweite Verfahrensschritt erneut ausgeführt, wobei in diesem Fall der zumindest eine aktuell ausführbare Befehl an das tragbare Bediengerät (berührungslos) übertragen wird. Dieser zumindest eine ausführbare Befehl wird im Anschluss daran durch das tragbare Bediengerät dem Benutzer dargestellt.

Nachfolgend wird die Erfindung rein beispielhaft unter Bezugnahme auf die Zeichnungen beschrieben. Es zeigen:
Figur 1: ein Ausführungsbeispiel von zwei sich beweglich trennenden Schutzeinrichtungen zum Absichern einer Maschine, die über eine Sicherheitszuhaltung und ein Türsystem mit einer Sicherheitszuhaltung verschlossen sind;
Figur 2: einen Verbund aus einer Sicherheitszuhaltung und einer Sicherheitssteuerungsvorrichtung, die eine Maschine ansteuert;
Figur 3: einen Verbund aus einem Türsystem mit einer Sicherheitszuhaltung und einer Sicherheitssteuerungsvorrichtung, die eine Maschine ansteuert;
Figur 4: eine gemeinsame Integration eines Türsystems und einer Sicherheitssteuerungsvorrichtung;
Figur 5: einen Verbund aus einer Sicherheitszuhaltung, einer Sicherheitssteuerungsvorrichtung und zwei tragbaren Bediengeräten;
Figuren 6A, 6B:
   eine Auswahl eines Befehls auf dem tragbaren Bediengerät und eine Aktualisierung der möglichen ausführbaren Befehle auf dem tragbaren Bediengerät; und
Figuren 7A, 7B:
   verschiedene Verfahren zum Absichern einer Maschine mittels einer beweglich trennenden Schutzeinrichtung.

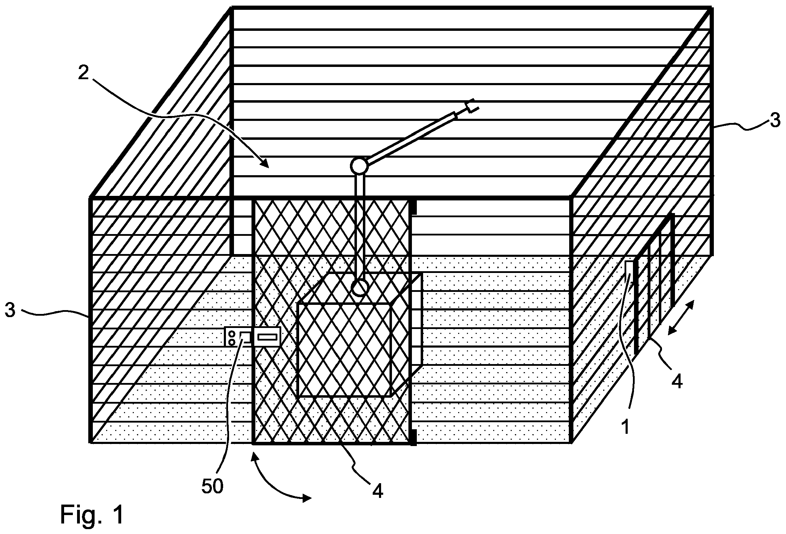

Figur 1 zeigt sowohl eine Sicherheitszuhaltung 1 als auch ein Türsystem 50 mit einer solchen Sicherheitszuhaltung 1. Die Sicherheitszuhaltung 1 wie auch das Türsystem 50 dienen zum Absichern einer Maschine 2. Die Maschine 2 stellt aufgrund ihrer räumlichen Bewegung eine Gefahr für das Betriebspersonal dar, weshalb die Maschine 2 innerhalb eines Käfigs 3 angeordnet ist. Dieser Käfig 3 umfasst einen oder mehrere Zugänge, über die das Bedienpersonal den Raum betreten kann, bzw. über die der Maschine 2 Material zugeführt bzw. über die durch die Maschine 2 verarbeitetes Material entnommen werden kann. Diese Zugänge sind durch beweglich trennende Schutzeinrichtungen 4 verschließbar. Bei der beweglich trennenden Schutzeinrichtung 4 handelt es sich in Figur 1 um Türen. Es könnten allerdings auch Tore bzw. Klappen sein. Die Sicherheitszuhaltung 1 ist in diesem Beispiel dazu ausgebildet, um eine beweglich trennende Schutzeinrichtung 4 in Form einer Schiebetür abzusichern, wohingegen das Türsystem 50 dazu ausgebildet ist, um eine beweglich trennende Schutzeinrichtung 4 in Form einer Drehtür abzusichern.

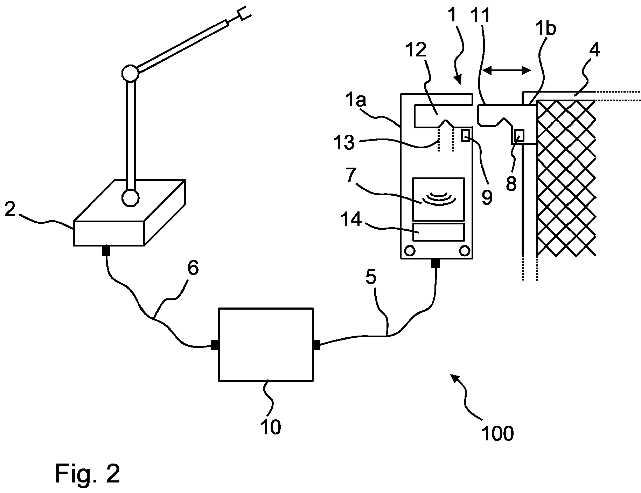

Figur 2 zeigt einen Verbund 100 aus einer Sicherheitszuhaltung 1 und einer Sicherheitssteuerungsvorrichtung 10, die eine Maschine 2 ansteuert. Die Sicherheitszuhaltung 1 ist dazu ausgebildet, um mit der Sicherheitssteuerungsvorrichtung 10 zu kommunizieren. Diese Kommunikation erfolgt insbesondere über eine erste Kabelverbindung 5. Die Sicherheitssteuerungsvorrichtung 10 ist außerdem dazu ausgebildet, um mit der Maschine 2 zu kommunizieren. Diese Kommunikation erfolgt insbesondere über eine zweite Kabelverbindung 6.

Die Sicherheitssteuerungsvorrichtung 10 könnte auch dazu ausgebildet sein, um mehr als eine Maschine 2 anzusteuern und/oder um mit mehr als einer Sicherheitszuhaltung 1 zu kommunizieren.

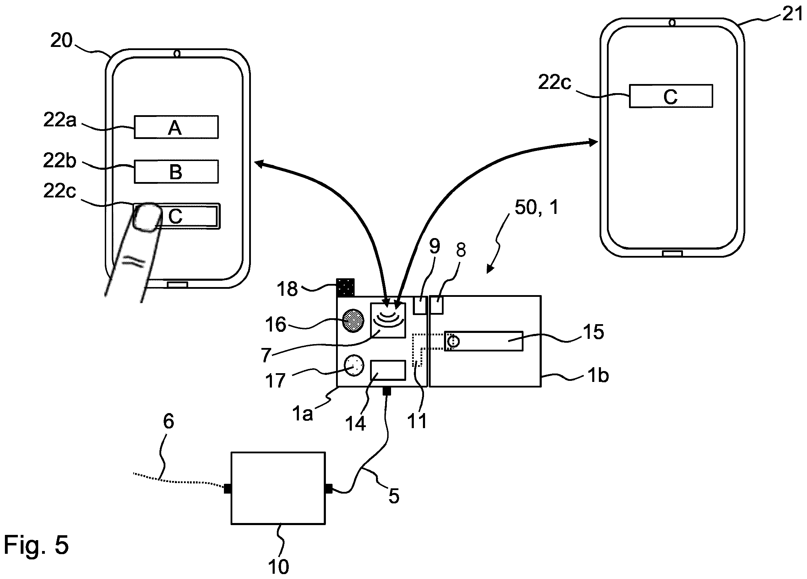

Die Sicherheitszuhaltung 1 umfasst ein erstes Funkmodul 7, welches dazu ausgebildet ist, um eine berührungslose (drahtlose) Kommunikation zu einem tragbaren Bediengerät 20 (siehe Figur 5) herzustellen. Das erste Funkmodul 7 dient insbesondere zur Kommunikation in einem Nahfeldbereich. Das erste Funkmodul 7 ist daher ein NFC-Funkmodul. Die Kommunikation zwischen dem erste Funkmodul 7 und dem tragbaren Bediengerät 20, welches ein Benutzer hält, soll nur dann erfolgen können, wenn der Benutzer in unmittelbarer Umgebung zu der Sicherheitszuhaltung 1 steht. Der Wortlaut "in unmittelbarer Umgebung" erfordert, dass der Benutzer vorzugsweise weniger als 10 m, 8 m, 5 m oder weniger als 3 m, 1m oder 0,5 m von der Sicherheitszuhaltung 1 entfernt steht. Das erste Funkmodul 7 ist vorzugsweise frei von einem Mobilfunk-Chip oder WLAN-Chip.

Die Stromversorgung der Sicherheitszuhaltung 1 kann beispielsweise über die Sicherheitssteuerungsvorrichtung 10 oder über eine separate Zuleitung erfolgen.

Die Sicherheitszuhaltung 1 umfasst vorzugsweise ein RFID-Tag 8. Das erste Funkmodul 7 oder ein zweites Funkmodul 9 (siehe Figur 2) ist dazu ausgebildet, Daten von dem RFID-Tag 8 zu empfangen, wenn die beweglich trennende Schutzeinrichtung 4 geschlossen ist. Die Sicherheitszuhaltung 1 umfasst vorzugsweise einen stationär angeordneten ersten Teil 1a und einen beweglich bzw. an der beweglich trennenden Schutzeinrichtung 4 mitfahrenden zweiten Teil 1b. Das RFID-Tag 8 ist vorzugsweise am zweiten Teil 1b angeordnet, wobei der zweite Teil 1b mit der beweglich trennenden Schutzeinrichtung 4 verbunden, insbesondere verschraubt ist. Der zweite Teil 1b der Sicherheitszuhaltung 1 umfasst außerdem ein Sperrglied 11, welches im geschlossenen Zustand der beweglich trennenden Schutzeinrichtung 4 in eine Öffnung 12 im ersten Teil 1a der Sicherheitszuhaltung 1 eingreift und in dieser Öffnung 12 bevorzugt durch ein Verriegelungselement 13, insbesondere in Form eines Bolzens, verriegelt wird.

Die Sicherheitszuhaltung 1 ist dazu ausgebildet, um für den Fall, dass über das zweite Funkmodul 9 Daten von dem RFID-Tag 8 empfangen werden können, einen geschlossenen Zustand der beweglich trennenden Schutzeinrichtung 4 an die Sicherheitssteuerungsvorrichtung 10 zu übertragen. Für den anderen Fall, also wenn keine Daten über das zweite Funkmodul 9 von dem RFID-Tag 8 empfangen werden können, ist die Sicherheitszuhaltung 1 dazu ausgebildet, um einen offenen Zustand der beweglich trennenden Schutzeinrichtung 4 an die Sicherheitssteuerungsvorrichtung 10 zu übertragen. In diesem Fall ist die Sicherheitssteuerungsvorrichtung 10 bevorzugt dazu ausgebildet, um die Maschine 2 derart anzusteuern, dass diese anhält (Maschinenstopp).

Die Sicherheitszuhaltung 1 umfasst vorzugsweise noch eine Datenverarbeitungseinheit 14, die dazu ausgebildet ist, Daten des ersten und zweiten Funkmoduls 7, 9 zu empfangen und die Kommunikation mit der Sicherheitssteuerungsvorrichtung 10 abzuwickeln. Die Datenverarbeitungseinheit 14 könnte außerdem dazu ausgebildet sein, um Daten an das erste Funkmodul 7 zu übertragen.

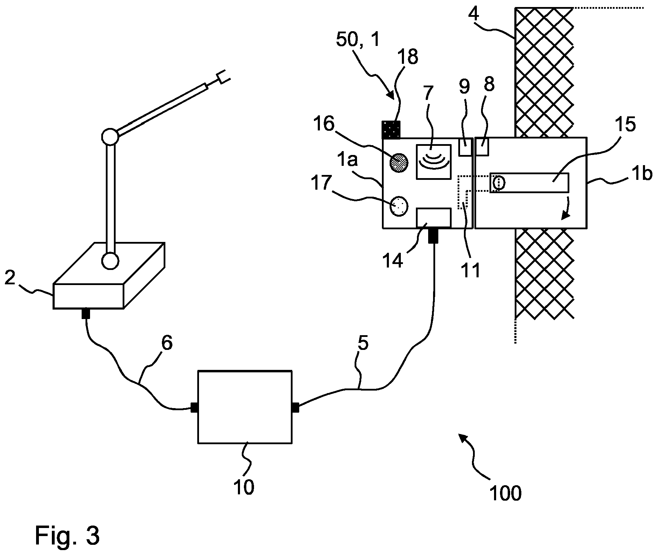

In Figur 3 ist ein Türsystem 50 dargestellt, welches die Sicherheitszuhaltung 1 umfasst. Daher umfasst das Türsystem 50 in diesem Ausführungsbeispiel ebenfalls einen ersten Teil 1a und einen zweiten Teil 1b. Der zweite Teil 1b ist an der beweglich trennenden Schutzeinrichtung 4 mitfahrendend angeordnet. Der erste Teil 1a umfasst vorzugsweise einen ersten Taster 16 bzw. genau einen (einzigen) ersten Taster 16. Der erste Taster 16 ist vorzugsweise ein Not-Halt-Taster, über den der Befehl "Maschinenstopp" an die Sicherheitssteuerungsvorrichtung 10 übertragen wird, die wiederum dafür sorgt, dass die Maschine 2 sofort angehalten wird. Optional könnte der erste Teil 1a noch einen zweiten Taster 17 umfassen. Bei diesem zweiten Taster 17 handelt es sich vorzugsweise um einen Reset-Taster, um die gestoppte Maschine 2 wieder in einen Betriebsmodus zu überführen. Optional kann der erste Teil 1a noch über eine visuelle Anzeige 18 verfügen, die insbesondere in Form von einer oder mehreren LEDs ausgestaltet ist. Über die visuelle Anzeige 18 kann der aktuelle Betriebszustand der Maschine 2 bzw. des Türsystems 50 dem Betriebspersonal angezeigt werden. Hierzu kann die visuelle Anzeige 18 z.B. unterschiedliche Farben einsetzen. Der zweite Teil 1b umfasst einen Türgriff 15. Der Türgriff 15 kann insbesondere dann betätigt werden, wenn die Sicherheitssteuerungsvorrichtung 10 die Maschine 2 angehalten und einen Entriegelungsbefehl an das Türsystem 50 übertragen hat. Nicht dargestellt ist eine optionale Fluchtentriegelung, die insbesondere auf der Rückseite des Türsystems 50 angeordnet ist und es dem Bedienpersonal erlaubt auch vom Inneren des Käfigs 3 das Türsystem 50 zu öffnen. Für den Fall, dass die Fluchtentriegelung betätigt wird, ist das Türsystem 50 insbesondere dazu ausgebildet, um den Befehl "Maschinenstopp" an die Sicherheitssteuerungsvorrichtung 10 zu übermitteln, die wiederum die Maschine 2 anhält. Der erste Teil 1b kann auch als Hauptmodul bezeichnet werden, wohingegen der zweite Teil 1b auch als Griffmodul bezeichnet werden kann.

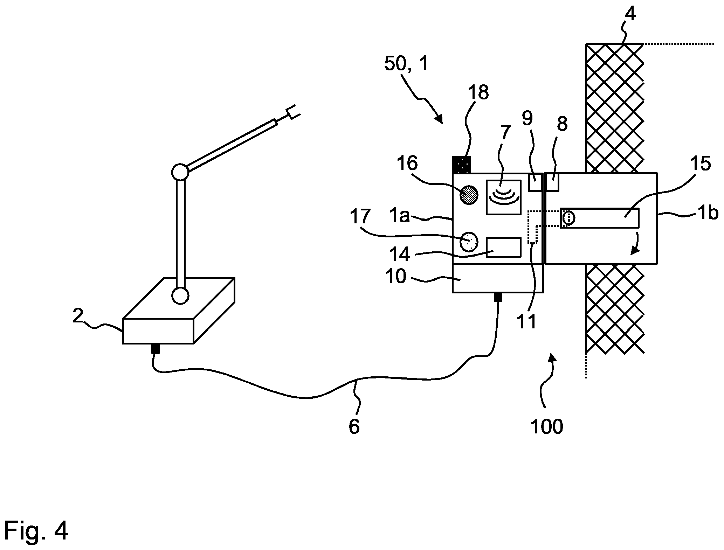

Figur 4 zeigt ein weiteres Ausführungsbeispiel des erfindungsgemäßen Verbunds 100. In diesem Fall sind das Türsystem 50 und die Sicherheitssteuerungsvorrichtung 10 in einem gemeinsamen Gehäuse angeordnet. Die Datenverarbeitungseinheit 14 ist vorzugsweise weiterhin Teil der Sicherheitszuhaltung 1 und damit weiterhin Teil des Türsystems 50. Grundsätzlich wäre es ebenfalls denkbar, dass die Datenverarbeitungseinheit 14 zur Sicherheitssteuerungsvorrichtung 10 gehört. Es wäre ebenfalls denkbar, dass die Datenverarbeitungseinheit 14 zusätzlich als Datenverarbeitungseinheit 14 der Sicherheitssteuerungsvorrichtung 10 fungiert. In diesem Fall hätten die Sicherheitszuhaltung 1 und damit das Türsystem 50 und die Sicherheitssteuerungsvorrichtung 10 eine gemeinsame Datenverarbeitungseinheit 14. Die Datenverarbeitungseinheit 14 kann als Microcontroller und/oder FPGA und/oder Prozessor ausgebildet sein.

Figur 5 zeigt ein weiteres Ausführungsbeispiel des erfindungsgemäßen Verbunds 100. Im Folgenden wird erläutert, wie die Kommunikation zwischen der Sicherheitszuhaltung 1 bzw. dem Türsystem 50 mit der Sicherheitszuhaltung 1 und einem tragbaren Bediengerät 20 funktioniert. Es wird betont, dass der Verbund 100 entweder eine Sicherheitszuhaltung 1 oder ein Türsystem 50 mit einer entsprechenden Sicherheitszuhaltung 1 umfassen kann.

Sämtliche Ausführungen, die nachfolgend gemacht werden und insbesondere die Kommunikation zu dem tragbaren Bediengerät 20 betreffen, gelten sowohl für den Einsatz der Sicherheitszuhaltung 1 als auch für den Einsatz des Türsystems 50, welches eine solche Sicherheitszuhaltung 1 umfasst.

Das tragbare Bediengerät 20 ist dazu ausgebildet, um sich mit der Sicherheitszuhaltung 1 bzw. mit dem Türsystem 50 zu koppeln, wenn das tragbare Bediengerät 20 in die Nähe der Sicherheitszuhaltung 1 bzw. in die Nähe des Türsystems 50 gebracht wird. Dies kann automatisch erfolgen oder erst nachdem ein Benutzer eine entsprechende Software Applikation auf dem tragbaren Bediengerät 20 gestartet hat. Nach Abschluss des Koppelvorgangs können Daten zwischen der Sicherheitszuhaltung 1 bzw. dem Türsystem 50 und dem tragbaren Bediengerät 20 berührungslos (drahtlos) (bidirektional) ausgetauscht werden.

Die Sicherheitszuhaltung 1 bzw. das Türsystem 50 ist dazu ausgebildet, um einen oder mehrere ausführbare Befehle 22a, 22b, 22c von der Sicherheitssteuerungsvorrichtung 10 zu empfangen und an das tragbare Bediengerät 20 berührungslos zu übertragen.

Das tragbare Bediengerät 20 ist dazu ausgebildet, um diesen einen oder die mehreren ausführbaren Befehle 22a, 22b, 22c einem Benutzer darzustellen. In Figur 5 erfolgt das Darstellen durch Anzeige auf einem vorzugsweise berührungsempfindlichen Bildschirm des tragbaren Bediengeräts 20. Unterschiedliche Befehle 22a, 22b, 22c können beispielsweise durch unterschiedliche Farben und/oder Größen dargestellt werden. So könnte der Befehl "Maschinenstopp" größer und in einer anderen Farbe dargestellt werden, als die übrigen Befehle.

Der Benutzer kann nun einen oder mehrere der ausführbaren Befehle 22a, 22b, 22c auswählen. Dieses Auswählen erfolgt beispielsweise durch Tippen auf einen bestimmten Bereich (z.B. Schaltfläche) des Bildschirms in der Software Applikation wie dies durch den Finger in Figur 5 dargestellt ist. Das tragbare Bediengerät 20 ist dazu ausgebildet, um die Auswahl zu erkennen (die optional noch durch den Benutzer bestätigt werden muss (ggf. erfordert das Bestätigen auch die Eingabe einer Legitimierung wie z.B. eines Passworts, Fingerabdrucks, Gesichtsscans)). Das tragbare Bediengerät 20 ist weiterhin dazu ausgebildet, um den einen oder die mehreren ausgewählten Befehle 22a, 22b, 22c berührungslos an die Sicherheitszuhaltung 1 bzw. das Türsystem 50 (mit der Sicherheitszuhaltung 1) zu übertragen.

Die Sicherheitszuhaltung 1 bzw. das Türsystem 50 ist dazu ausgebildet, um den einen oder die mehreren ausgewählten Befehle 22a, 22b, 22c von dem tragbaren Bediengerät 20 zu empfangen und an die Sicherheitssteuerungsvorrichtung 10 zu übertragen.

Die Sicherheitssteuerungsvorrichtung 10 ist dazu ausgebildet, um den einen oder die mehreren Befehle 22a, 22b, 22c auszuführen und zum Beispiel die Maschine 2 zu stoppen oder zu starten.

Die Sicherheitszuhaltung 1 bzw. das Türsystem 50 sind optional auch dazu ausgebildet, um mögliche Fehlerzustände an das tragbare Bediengerät 20 zu übertragen. Das tragbare Bediengerät 20 ist dann dazu ausgebildet, um diese möglichen Fehlerzustände dem Benutzer darzustellen, insbesondere auf dem Bildschirm anzuzeigen. Ein möglicher Fehlerzustand ist beispielsweise der Fall, wonach die beweglich trennende Schutzeinrichtung 4 nicht geschlossen ist, also wenn bei Einsatz des RFID-Tags 8 keine Daten von dem RFID-Tag 8 an das erste bzw. zweite Funkmodul 7, 9 übertragen werden. Der Benutzer kann mittels eines derartigen Fehlerzustands zielgerichtet auf Fehlersuche gehen.

Die Sicherheitssteuerungsvorrichtung 10 ist bevorzugt ebenfalls dazu ausgebildet, um die Zulässigkeit des einen oder der mehreren ausgewählten Befehle 22a, 22b, 22c zu prüfen, bevor diese ausgeführt werden.

In Figur 5 ist noch ein weiteres tragbares Bediengerät 21 dargestellt. Auch dieses weitere tragbare Bediengerät 21 ist mit der Sicherheitszuhaltung 1 bzw. dem Türsystem 50 gekoppelt und dazu ausgebildet, um mit der Sicherheitszuhaltung 1 bzw. dem Türsystem 50 Daten auszutauschen. Zu erkennen ist, dass das weitere tragbare Bediengerät 21 weniger auswählbare Befehle 22c auf dem Bildschirm anzeigt als das tragbare Bediengerät 20.

Bevorzugt erlaubt daher der Verbund 100, dass je nach Berechtigung des Benutzers das jeweilige tragbare Bediengerät 20, 21 ausführbare Befehle 22a, 22b, 22c darstellt, die zur Berechtigung des Benutzers korrespondieren. Ein Benutzer, der für den Betrieb der Maschine zuständig ist erhält vorzugsweise neben dem Befehl "Maschinenstopp" auch den Befehl für einen "Maschinenreset" bzw. "Maschinenstart" angezeigt, wohingegen ein Benutzer, der für die Reinigung der Räumlichkeiten zuständig ist, lediglich den Befehl "Maschinenstopp" angezeigt bekommt.

Das tragbare Bediengerät 20 ist daher dazu ausgebildet, um eine Authentifizierungsinformation zu erstellen und an die Sicherheitszuhaltung 1 bzw. das Türsystem 50 zu übertragen. Die Sicherheitszuhaltung 1 bzw. das Türsystem 50 ist dazu ausgebildet, um diese Authentifizierungsinformation an die Sicherheitssteuerungsvorrichtung 10 zu übertragen.

Die Sicherheitssteuerungsvorrichtung 10 ist bevorzugt dazu ausgebildet, um einen ausgewählten Befehl 22a, 22b, 22c nur dann auszuführen, wenn der Benutzer anhand der Authentifizierungsinformation authentifiziert wurde.

Die Sicherheitssteuerungsvorrichtung 10 ist bevorzugt dazu ausgebildet, um je nach empfangener Authentifizierungsinformation bzw. erfolgter Authentifizierung des Benutzers durch diese Authentifizierungsinformation unterschiedliche ausführbare Befehle 22a, 22b, 22c an die Sicherheitszuhaltung 1 bzw. das Türsystem 50 zu übertragen, wobei die Sicherheitszuhaltung 1 bzw. das Türsystem 50 dazu ausgebildet ist, diese jeweiligen möglichen ausführbaren Befehle 22a, 22b, 22c an das tragbare Bediengerät 20 berührungslos zu übertragen.

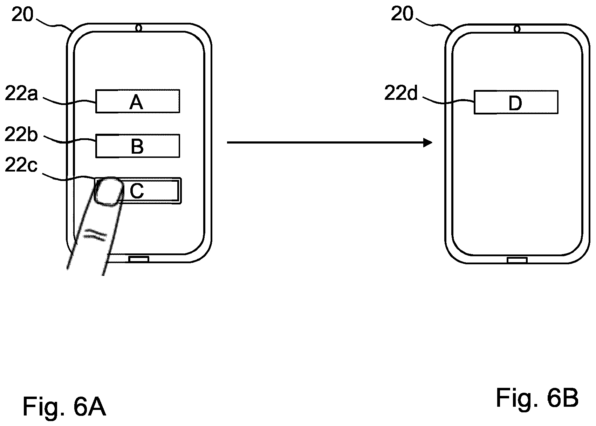

Die Figuren 6A und 6B zeigen wie sich nach der Auswahl eines Befehls 22a, 22b, 22c auf dem tragbaren Bediengerät 20 die auswählbaren Befehle 22a, 22b, 22c aktualisieren. So hat der Benutzer auf dem tragbaren Bediengerät 20 in Figur 6A drei Befehle 22a, 22b, 22c zur Auswahl, von denen er den dritten Befehl 22c auswählt. Das tragbare Bediengerät 20 ist dazu ausgebildet, diesen dritten Befehl 22c an die Sicherheitszuhaltung 1 bzw. das Türsystem 50 (berührungslos) zu übertragen, wobei die Sicherheitszuhaltung 1 bzw. das Türsystem 50 wiederum dazu ausgebildet ist, um diesen dritten Befehl an die Sicherheitssteuerungsvorrichtung 10 zu übertragen. Die Sicherheitssteuerungsvorrichtung 10 ist dazu ausgebildet, um diesen dritten Befehl auszuführen. Die Sicherheitssteuerungsvorrichtung 10 ist weiter dazu ausgebildet, um in Abhängigkeit des ausgeführten Befehls 22c zumindest einen aktuell (im Weiteren) ausführbaren Befehl 22d an die Sicherheitszuhaltung 1 bzw. das Türsystem 50 zu übertragen, wobei die Sicherheitszuhaltung 1 bzw. das Türsystem 50 dazu ausgebildet ist, um diesen weiteren aktuell ausführbaren Befehl 22d an das tragbare Bediengerät 20 berührungslos zu übertragen.

Dieser weitere aktuell ausführbare Befehl 22d wird durch das tragbare Bediengerät 20 auf dem (berührungsempfindlichen) Bildschirm gemäß Figur 6B dargestellt.

Das tragbare Bediengerät 20 ist daher dazu ausgebildet, die Liste mit ausführbaren Befehlen 22a, 22b, 22c nach Auswahl eines ausführbaren Befehls 22a, 22b, 22c zu aktualisieren. Diese Aktualisierung erfolgt insbesondere dahingehend, dass im Folgenden nur noch weitere Befehle 22d angezeigt werden, die auf den bereits ausgewählten und ausgeführten Befehl 22a, 22b, 22c hin ausgeführt werden können. Wurde der Befehl "Maschinenstopp" ausgewählt und ausgeführt, so kann dieser Befehl nicht erneut ausgewählt und ausgeführt werden. Stattdessen kann im Folgenden nun der Befehl "Maschinenstart" ausgewählt werden.

Grundsätzlich ist es möglich, dass das tragbare Bediengerät 20 dazu ausgebildet ist, um bestimmte Befehle 22a, 22b, 22c nur zu bestimmten Tagen und/oder Uhrzeiten anzuzeigen.

Die Sicherheitssteuerungsvorrichtung 10 könnte dazu ausgebildet sein, um eine Liste mit möglichen ausführbaren Befehlen direkt von der zumindest einen Maschine 2 zu empfangen. Dadurch könnte die Installation der Sicherheitszuhaltung 1 bzw. des Türsystems 50 besonders einfach erfolgen. So müsste die Sicherheitszuhaltung 1 bzw. das Türsystem 50 lediglich mit der Sicherheitssteuerungsvorrichtung 10 verbunden werden, wobei die Sicherheitssteuerungsvorrichtung 10 mit der entsprechenden Maschine 2 verbunden wird. Im Folgenden können lediglich gültige und damit überhaupt ausführbare Befehle von der Maschine 2 über die Sicherheitssteuerungsvorrichtung 10 und die Sicherheitszuhaltung 1 bzw. das Türsystem 50 an das tragbare Bediengerät 20 übermittelt werden.

Die Sicherheitssteuerungsvorrichtung 10 könnte auch noch mit einer übergeordneten Leitstelle verbunden werden, über die entsprechende Berechtigungen für die Benutzer übermittelt werden können. Die Leitstelle könnte auch dazu ausgebildet sein, einen Benutzer entsprechend zu authentifizieren, nachdem die Sicherheitssteuerungsvorrichtung 10 die Authentifizierungsinformation an die Leitstelle entsprechend weitergeleitet hat.

Es wäre auch denkbar, dass ein Benutzer einen Befehl 22a, 22b, 22c anfordern kann. Das tragbare Bediengerät 20 wäre dann dazu ausgebildet, um diese Befehlsanforderung an die Sicherheitszuhaltung 1 bzw. das Türsystem 50 zu übertragen. Die Sicherheitszuhaltung 1 bzw. das Türsystem 50 ist wiederum dazu ausgebildet, um die Befehlsanforderung an die Sicherheitssteuerungsvorrichtung 10 zu übertragen. Die Sicherheitssteuerungsvorrichtung 10 ist dazu ausgebildet, um die Befehlsanforderung an die Leitstelle zu übertragen. Dort kann dann entschiedenen werden, ob der Benutzer die Berechtigung haben soll, einen solchen angeforderten Befehl einmalig, mehrmalig oder dauerhaft bzw. innerhalb einen bestimmten Zeitintervalls auszuführen oder nicht. Wird dies positiv entschieden so kommuniziert die Leitstelle dies an die Sicherheitssteuerungsvorrichtung 10, wobei die Sicherheitssteuerungsvorrichtung 10 dies wiederum an die Sicherheitszuhaltung 1 bzw. das Türsystem 50 kommuniziert und wobei die Sicherheitszuhaltung 1 bzw. das Türsystem 50 dies wiederum an das tragbare Bediengerät 20 kommuniziert, welches diesen nun zugelassenen auswählbaren Befehl 22a, 22b, 22c dem Benutzer darstellt.

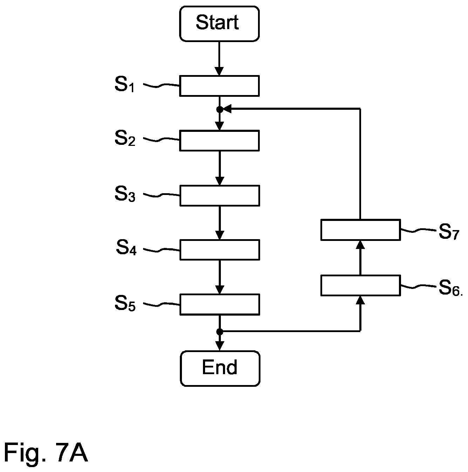

Figur 7A zeigt ein Ausführungsbeispiel des erfindungsgemäßen Verfahrens zum Absichern der Maschine 2 mittels der beweglich trennenden Schutzeinrichtung 4.

In einem ersten Verfahrensschritt S₁ wird das tragbare Bediengerät 20 mit der Sicherheitszuhaltung 1 bzw. dem Türsystem 50 gekoppelt, sodass ein Datenaustausch (berührungslos) möglich ist. In einem zweiten Verfahrensschritt S₂ werden mögliche ausführbare Befehle 22a, 22b, 22c an das tragbare Bediengerät 20 (berührungslos) übertragen und durch dieses tragbare Bediengerät dargestellt. In einem dritten Verfahrensschritt S₃ wird ein ausgewählter Befehl 22a, 22b, 22c von dem tragbaren Bediengerät 20 an die Sicherheitszuhaltung 1 bzw. an das Türsystem 50 übermittelt. In einem vierten Verfahrensschritt S₄ wird der ausgewählte Befehl 22a, 22b, 22c von der Sicherheitszuhaltung 1 bzw. von dem Türsystem 50 an die Sicherheitssteuerungsvorrichtung 10 übertragen. In einem fünften Verfahrensschritt S₅ wird der ausgewählte Befehl 22a, 22b, 22c durch die Sicherheitssteuerungsvorrichtung 10 ausgeführt.

Optional kann im Anschluss an den fünften Verfahrensschritt S₅ in einem sechsten Verfahrensschritt Ss festgestellt werden, welcher zumindest eine Befehl 22d nach Ausführung des ausgewählten Befehls 22a, 22b, 22c aktuell ausführbar ist.

In einem siebten Verfahrensschritt S₇ kann der zumindest eine aktuell ausführbare Befehl 22d an die Sicherheitszuhaltung 1 bzw. das Türsystem 50 übertragen werden. Im Anschluss daran würden die Verfahrensschritte S₂ bis S₅ bezüglich des zumindest einen aktuell ausführbaren Befehls 22d wiederholt werden.

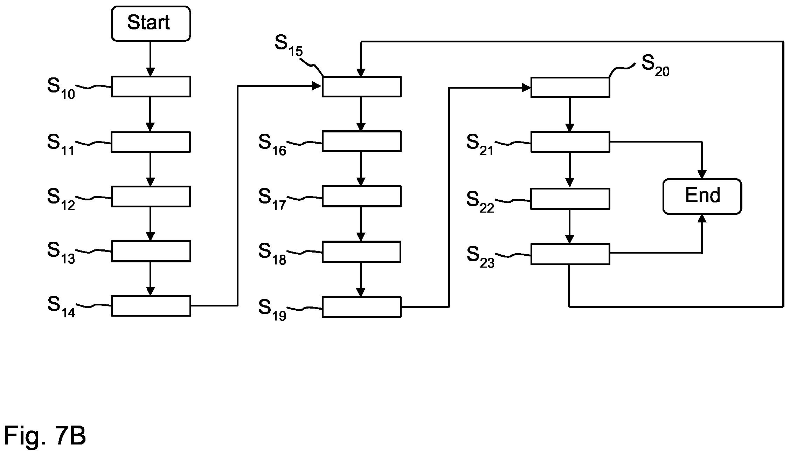

Figur 7B zeigt ein weiteres Ausführungsbeispiel des erfindungsgemäßen Verfahrens zum Absichern der Maschine 2 mittels der beweglich trennenden Schutzeinrichtung 4. Das Verfahren aus Figur 7B beinhaltet im Vergleich zu dem Verfahren aus Figur 7A weitere Details.

In dem Verfahrensschritt S₁₀ wird eine Software Applikation auf dem tragbaren Bediengerät 20 gestartet. In dem Verfahrensschritt S₁₁ wird das tragbare Bediengerät 20 in unmittelbare Nähe bzw. Lesereichweite des ersten Funkmoduls 7 bzw. der Antenne, welche mit dem ersten Funkmodul 7 verbunden ist, gebracht. In dem Verfahrensschritt S₁₂ wird das tragbare Bediengerät 20 mit der Sicherheitszuhaltung 1 bzw. dem Türsystem 50 gekoppelt. In dem Verfahrensschritt S₁₃ werden Statusinformationen von der Sicherheitszuhaltung 1 bzw. dem Türsystem 50 auf das tragbare Bediengerät 20 übertragen. In dem Verfahrensschritt S₁₄ kommuniziert die Sicherheitszuhaltung 1 bzw. das Türsystem 50 an die Sicherheitssteuerungsvorrichtung 10, dass ein tragbares Bediengerät 20 mit der Sicherheitszuhaltung 1 bzw. dem Türsystem 50 gekoppelt ist. In dem Verfahrensschritt S₁₅ kommuniziert die Sicherheitssteuerungsvorrichtung 10 an die Sicherheitszuhaltung 1 bzw. das Türsystem 50 zumindest einen oder mehrere mögliche aktuell ausführbare Befehle 22a, 22b, 22c. Es werden also Befehle 22a, 22b, 22c übertragen, die im derzeitigen Zustand der Sicherheitssteuerungsvorrichtung 10 ausgeführt werden können. In dem Verfahrensschritt S₁₆ werden der zumindest eine oder die mehreren möglichen aktuell ausführbaren Befehle 22a, 22b, 22c auf das tragbare Bediengerät 20 übertragen. In dem Verfahrensschritt S₁₇ wird der zumindest eine oder die mehreren möglichen aktuell ausführbaren Befehle 22a, 22b, 22c auf dem (z.B. berührungsempfindlichen) Bildschirm des tragbaren Bediengeräts 20 angezeigt. In dem Verfahrensschritt S₁₈ wird einer oder mehrere mögliche aktuell ausführbaren Befehle 22a, 22b, 22c (durch einen Benutzer) ausgewählt. In dem Verfahrensschritt S₁₉ wird der zumindest eine oder die mehreren möglichen aktuell ausgewählten Befehle 22a, 22b, 22c von dem tragbaren Bediengerät 20 zu der Sicherheitszuhaltung 1 bzw. zu dem Türsystem 50 übertragen. In dem Verfahrensschritt S₂₀ wird der zumindest eine oder die mehreren möglichen aktuell ausgewählten Befehle 22a, 22b, 22c von der Sicherheitszuhaltung 1 bzw. dem Türsystem 50 zu der Sicherheitssteuerungsvorrichtung 10 übertragen. In dem Verfahrensschritt S₂₁ wird der zumindest eine oder die mehreren möglichen aktuell ausgewählten Befehle 22a, 22b, 22c von der Sicherheitssteuerungsvorrichtung 10 auf Zulässigkeit überprüft. Ist der zumindest eine oder die mehreren möglichen aktuell ausgewählten Befehle 22a, 22b, 22c unzulässig, so werden diese nicht ausgeführt und das Verfahren ist vorzugsweise beendet. Grundsätzlich könnte in diesem Fall eine Meldung zurück an das tragbare Bediengerät 20 übertragen werden, in welcher dem Benutzer mitgeteilt wird, dass der zumindest eine oder die mehreren möglichen aktuell ausgewählten Befehle 22a, 22b, 22c als unzulässig verworfen und nicht ausgeführt wurde(n). In dem Verfahrensschritt S₂₂ wird für den Fall, dass der zumindest eine oder die mehreren möglichen aktuell ausgewählten Befehle 22a, 22b, 22c als zulässig angesehen wurde(n), der zumindest eine oder die mehreren möglichen aktuell ausgewählten Befehle 22a, 22b, 22c durch die Sicherheitssteuerungsvorrichtung 10 ausgeführt. In dem Verfahrensschritt S₂₃ aktualisiert die Sicherheitssteuerungsvorrichtung 10 den Systemstatus und/oder stellt fest, welcher zumindest eine Befehl 22d im Hinblick auf den zumindest einen oder die mehreren ausgeführten Befehle 22a, 22b, 22c nun ausführbar ist. Im Folgenden geht es mit dem Verfahrensschritt S₁₅ weiter.

Grundsätzlich ist es besonders vorteilhaft, dass durch Einsatz der erfindungsgemäßen Sicherheitszuhaltung 1 bzw. des erfindungsgemäßen Türsystems 50 geringere Herstellungskosten entstehen, insbesondere weil die Anzahl der Bedientasten abnimmt. Weiterhin lässt sich die Erfindung in einem kleineren Gehäuse integrieren. Die Robustheit gegenüber bisherigen Lösungen nimmt ebenfalls zu. Dies gilt insbesondere in Bezug auf den IP-Schutzgrad in Bezug auf die Vibrationsfestigkeit. Weiterhin lassen sich die erfindungsgemäße Sicherheitszuhaltung 1 bzw. das erfindungsgemäße Türsystem 50 leichter reinigen. Es findet außerdem kein Verschleiß von Tastern statt, weil diese entweder nicht eingesetzt bzw. nur selten verwendet werden. Außerdem besteht eine hohe Flexibilität beim Festlegen und auch beim Ändern von Anzahl und Funktion der zu Verfügung gestellten Befehle 22a, 22b, 22c. Zusätzlich verringert sich durch Einsatz der erfindungsgemäßen Sicherheitszuhaltung 1 bzw. des erfindungsgemäßen Türsystems 50 die Wahrscheinlichkeit einer Fehlbedienung, weil eine Möglichkeit zum Sperren von Tastern besteht bzw. lediglich zulässige Befehle 22a, 22b, 22c in Abhängigkeit des Zustands der Maschine 2 angezeigt werden. Ein weiterer Vorteil der erfindungsgemäßen Sicherheitszuhaltung 1 bzw. des erfindungsgemäßen Türsystems 50 besteht, weil ein Rechtemanagement einführbar ist, sodass unterschiedliche Benutzer unterschiedliche Befehle 22a, 22b, 22c ausführen können. Ein unautorisiertes Betätigen von Tastern ist daher vermeidbar. Weiterhin besteht ein Vorteil der erfindungsgemäßen Sicherheitszuhaltung 1 bzw. des erfindungsgemäßen Türsystems 50, weil Benutzer bereits vorhandene (persönliche) tragbare Bediengeräte 20, in Form von Smartphones, zur Bedienung verwenden können. Ein zusätzlicher Vorteil besteht, weil die auswählbaren Befehle 22a, 22b, 22c auf dem tragbaren Bediengerät 20 durch unterschiedliche Farben durch das tragbare Bediengerät 20 hervorgehoben werden können. Grundsätzlich vereinfacht sich auch die Lagerhaltung, weil lediglich ein Typ der Sicherheitszuhaltung 1 bzw. lediglich ein Typ des erfindungsgemäßen Türsystems 50 vorgehalten werden muss. Bei einem Defekt einer Sicherheitszuhaltung 1 bzw. eines Türsystems 50 kann ein Austausch sehr einfach erfolgen. Außerdem ist die Verkabelung einfacher als beim Stand der Technik, weil die auswählbaren Befehle 22a, 22b, 22c bzw. die ausgewählten Befehle 22a, 22b, 22c in Form eines digitalen Datenstroms zwischen der Sicherheitszuhaltung 1 bzw. dem Türsystem 50 und dem tragbaren Bediengerät 20 und/oder der Sicherheitssteuerungsvorrichtung 10 übertragen werden.

Es wird nochmals betont, dass in den Ansprüchen insbesondere eine Sicherheitszuhaltung 1 geschützt ist. Grundsätzlich wäre es allerdings auch denkbar, das Türsystem 50 zu schützen, wobei sich in diesem Fall die Ansprüche 1 bis 5 auf das Türsystem 50 beziehen würden. Ein in diesem Fall unabhängiger Anspruch 1 könnte dann wie folgt lauten:
Türsystem 50 für eine beweglich trennende Schutzeinrichtung 4 zum Absichern einer Maschine 2, wobei das Türsystem 50 dazu ausgebildet ist, um mit einer Sicherheitssteuerungsvorrichtung 10 zu kommunizieren und wobei das Türsystem 50 zumindest ein erstes Funkmodul 7 zur berührungslosen Kommunikation mit einem tragbaren Bediengerät 20 umfasst, wobei das Türsystem 50 dazu ausgebildet ist, um einen ausgewählten Befehl 22a, 22b, 22c von dem tragbaren Bediengerät 20 berührungslos zu empfangen und an die Sicherheitssteuerungsvorrichtung 10 zu übertragen.

In diesem Anspruch oder einem Unteranspruch könnte noch definiert werden, dass das Türsystem 50 weiterhin ein Hauptmodul 1a mit zumindest einem Taster 16, 17 und ein Griffmodul 1b mit einem Türgriff 15 umfasst.

Grundsätzlich könnte das Türsystem 50 auch derart eingeführt werden, dass es lediglich die Sicherheitszuhaltung 1 umfasst. So könnte ein entsprechender Anspruch, der sich auf die Sicherheitszuhaltung rückbezieht, wie folgt lauten: Türsystem 50 mit einer Sicherheitszuhaltung 1 gemäß einem der vorherigen Ansprüche, wobei das Türsystem 50 ein Hauptmodul 1a mit zumindest einem Taster 16, 17 und ein Griffmodul 1b mit einem Türgriff 15 umfasst.

Weiterhin könnte auch ein Computerprogramm geschützt werden. Ein Entsprechender Anspruch könnte wie folgt lauten:
Computerprogramm mit Befehlen, die, wenn das Programm von einem Computer ausgeführt wird, den Computer dazu veranlassen, das Verfahren gemäß einem der Ansprüche 14 oder 15 auszuführen.

Die Erfindung ist nicht auf die beschriebenen Ausführungsbeispiele beschränkt. Im Rahmen der Erfindung sind alle beschriebenen und/oder gezeichneten Merkmale beliebig miteinander kombinierbar.

### Bezugszeichenliste

| | |
|---|---|
| Sicherheitszuhaltung | 1 |
| erster Teil (Hauptmodul) | 1a |
| zweiter Teil (Griffmodul) | 1b |
| Maschine | 2 |
| Käfig | 3 |
| beweglich trennende Schutzeinrichtungen | 4 |
| erste Kabelverbindung | 5 |
| zweite Kabelverbindung | 6 |
| erstes Funkmodul | 7 |
| RFID-TAG | 8 |
| zweites Funkmodul | 9 |
| Sicherheitssteuerungsvorrichtung | 10 |
| Sperrglied | 11 |
| Öffnung | 12 |
| Verriegelungselement | 13 |
| Datenverarbeitungseinheit | 14 |
| Türgriff | 15 |
| Erster Taster (Not-Halt-Taster) | 16 |
| Zweiter Taster (Reset-Taster) | 17 |
| Visuelle Anzeige (LED) | 18 |
| Tragbares Bediengerät | 20 |
| Weiteres tragbares Bediengerät | 21 |
| ausführbare Befehle | 22a, 22b, 22c, 22d |
| Türsystem | 50 |
| Verbund | 100 |

## Patentansprüche

1. Sicherheitszuhaltung (1) für eine beweglich trennende Schutzeinrichtung (4) zum Absichern einer Maschine (2), wobei die Sicherheitszuhaltung (1) dazu ausgebildet ist, um mit einer Sicherheitssteuerungsvorrichtung (10) zu kommunizieren und wobei die Sicherheitszuhaltung (1) zumindest ein erstes Funkmodul (7) zur berührungslosen Kommunikation mit einem tragbaren Bediengerät (20) umfasst, **dadurch gekennzeichnet, dass** die Sicherheitszuhaltung (1) dazu ausgebildet ist, um einen auf dem tragbaren Bediengerät (20), aus mehreren auswählbaren Befehlen (20),ausgewählten Befehl (22a, 22b, 22c) von dem tragbaren Bediengerät (20) berührungslos zu empfangen und an die Sicherheitssteuerungsvorrichtung (10) zu übertragen.

2. Sicherheitszuhaltung (1) nach Anspruch 1,
**dadurch gekennzeichnet, dass**
die Sicherheitszuhaltung (1) dazu ausgebildet ist, um einen oder mehrere ausführbare Befehle (22a, 22b, 22c) von der Sicherheitssteuerungsvorrichtung (10) zu empfangen und an das tragbare Bediengerät (20) berührungslos zu übertragen.

3. Sicherheitszuhaltung (1) nach Anspruch 1 oder 2,
**dadurch gekennzeichnet, dass**
die Sicherheitszuhaltung (1) dazu ausgebildet ist, um eine Authentifizierungsinformation von dem tragbaren Bediengerät (20) berührungslos zu empfangen und an die Sicherheitssteuerungsvorrichtung (10) weiterzuleiten.

4. Sicherheitszuhaltung (1) nach einem der vorherigen Ansprüche,
**dadurch gekennzeichnet, dass**
das erste Funkmodul (7) ein NFC-Funkmodul ist.

5. Sicherheitszuhaltung (1) nach einem der vorherigen Ansprüche,
**dadurch gekennzeichnet, dass**
die Sicherheitszuhaltung (1) ein RFID-Tag (8) umfasst, wobei das erste Funkmodul (7) oder ein zweites Funkmodul (9) der Sicherheitszuhaltung (1) dazu ausgebildet ist, Daten von dem RFID-Tag (8) zu empfangen, wenn die beweglich trennende Schutzeinrichtung (4) geschlossen ist und wobei die Sicherheitszuhaltung (1) dazu ausgebildet ist, um den geschlossenen Zustand der beweglich trennenden Schutzeinrichtung (4) an die Sicherheitssteuerungsvorrichtung (10) zu übertragen.

6. Verbund (100) aus der Sicherheitszuhaltung (1) nach einem der vorherigen Ansprüche und der Sicherheitssteuerungsvorrichtung (10),
**dadurch gekennzeichnet, dass**
die Sicherheitssteuerungsvorrichtung (10) dazu ausgebildet ist, um den ausgewählten Befehl (22a, 22b, 22c) zu empfangen und auszuführen und dass die Sicherheitssteuerungsvorrichtung (10) weiter dazu ausgebildet ist, um in Abhängigkeit des ausgeführten Befehls (22a, 22b, 22c) zumindest einen aktuell ausführbaren Befehl (22d) an die Sicherheitszuhaltung (1) zu übertragen, wobei die Sicherheitszuhaltung (1) dazu ausgebildet ist, um diesen weiteren aktuell ausführbaren Befehl (22d) an das tragbare Bediengerät (20) berührungslos zu übertragen.

7. Verbund (100) nach Anspruch 6,
**dadurch gekennzeichnet, dass**
die Sicherheitssteuerungsvorrichtung (10) dazu ausgebildet ist, um eine Zulässigkeit des empfangenen ausgewählten Befehls (22a, 22b, 22c) zu prüfen, wobei der empfangene ausgewählte Befehl (22a, 22b, 22c) nur dann ausgeführt wird, wenn dieser zulässig ist.

8. Verbund (100) nach Anspruch 6 oder 7,
**dadurch gekennzeichnet, dass**
die Sicherheitssteuerungsvorrichtung (10) dazu ausgebildet ist, um je nach empfangener Authentifizierungsinformation des tragbaren Bediengeräts (20) unterschiedliche ausführbare Befehle (22a, 22b, 22c) an die Sicherheitszuhaltung (1) zu übertragen, wobei die Sicherheitszuhaltung (1) dazu ausgebildet ist, um diese jeweiligen möglichen ausführbaren Befehle (22a, 22b, 22c) an das tragbare Bediengerät (20) berührungslos zu übertragen.

9. Verbund (100) nach einem der Ansprüche 6 bis 8,
**dadurch gekennzeichnet, dass**
der Verbund (100) zumindest ein tragbares Bediengerät (20) umfasst, wobei das tragbare Bediengerät (20) dazu ausgebildet ist, um berührungslos mit der Sicherheitszuhaltung (1) zu kommunizieren und wobei das tragbare Bediengerät (20) weiter dazu ausgebildet ist, um auswählbare Befehle (22a, 22b, 22c) von der Sicherheitszuhaltung (1) zu empfangen und einem Benutzer darzustellen.

10. Verbund (100) nach Anspruch 9,
**dadurch gekennzeichnet, dass**
das tragbare Bediengerät (20) dazu ausgebildet ist, um eine Auswahl eines auswählbaren Befehls (22a, 22b, 22c) durch eine Eingabe des Benutzers zu erfassen und um den ausgewählten Befehl (22a, 22b, 22c) an die Sicherheitszuhaltung (1) berührungslos zu übertragen.

11. Verbund (100) nach Anspruch 9 oder 10,
**dadurch gekennzeichnet, dass**
das tragbare Bediengerät (20) dazu ausgebildet ist, um eine Authentifizierungsinformation von dem Benutzer zu erstellen und diese Authentifizierungsinformation an die Sicherheitszuhaltung (1) berührungslos zu übertragen.

12. Verbund (100) nach einem der Ansprüche 6 bis 11,
**dadurch gekennzeichnet, dass**
der Verbund (100) ein Türsystem (50) aufweist, wobei das Türsystem (50) die Sicherheitszuhaltung (1) umfasst und wobei das Türsystem (50) ein Hauptmodul (1a) mit zumindest einem Taster (16, 17) und ein Griffmodul (1b) mit einem Türgriff (15) umfasst.

13. Verbund (100) nach Anspruch 12,
**dadurch gekennzeichnet, dass**
das Türsystem (50) und die Sicherheitssteuerungsvorrichtung (10) in einem gemeinsamen Gehäuse angeordnet sind.

14. Verfahren zum Absichern einer Maschine (2) mittels einer beweglich trennenden Schutzeinrichtung (4), **gekennzeichnet durch** die folgenden Verfahrensschritte:
- Koppeln (S₁) eines tragbaren Bediengeräts (20) mit einer Sicherheitszuhaltung (1) bzw. einem Türsystem (50) mit einer Sicherheitszuhaltung (1);
- Übertragen (S₂) von möglichen ausführbaren Befehlen (22a, 22b, 22c) an das tragbare Bediengerät (20);
- Übertragen (S₃) eines auf dem tragbaren Bediengerät (20), aus mehreren auswählbaren Befehlen (20), ausgewählten Befehls (22a, 22b, 22c) von dem tragbaren Bediengerät (20) an die Sicherheitszuhaltung (1) bzw. an das Türsystem (50) mit der Sicherheitszuhaltung (1);
- Übertragen (S₄) des ausgewählten Befehls (22a, 22b, 22c) von der Sicherheitszuhaltung (1) bzw. von dem Türsystem (50) mit der Sicherheitszuhaltung (1) an eine Sicherheitssteuerungsvorrichtung (10);
- Ausführen (S₅) des ausgewählten Befehls (22a, 22b, 22c) durch die Sicherheitssteuerungsvorrichtung (10).

15. Verfahren nach Anspruch 14,
**gekennzeichnet durch** die folgenden Verfahrensschritte:
- Feststellen (S₆), welcher zumindest eine Befehl (22d) nach Ausführung des ausgewählten Befehls (22a, 22b, 22c) aktuell ausführbar ist;
- Übertragen (S₇) des zumindest einen aktuell ausführbaren Befehls (22d) an die Sicherheitszuhaltung (1) bzw. das Türsystem (50) mit der Sicherheitszuhaltung (1) durch die Sicherheitssteuerungsvorrichtung (10);
- Übertragen des zumindest einen aktuell ausführbaren Befehls (22d) an das tragbare Bediengerät (20) durch die Sicherheitszuhaltung (1) bzw. das Türsystem (50) mit der Sicherheitszuhaltung (1);
- Darstellen des zumindest einen aktuell ausführbaren Befehls (22d) durch das tragbare Bediengerät (20).

## Claims

1. A safety locking device (1) for a movable guard (4) for safeguarding a machine (2), wherein the safety locking device (1) is configured to communicate with a safety control apparatus (10) and wherein the safety locking device (1) comprises at least a first radio module (7) for contactless communication with a portable operating unit (20), **characterized in that** the safety locking device (1) is configured to contactlessly receive a command (22a, 22b, 22c) selected on the portable operating unit (20), from a plurality of selectable commands (22a, 22b, 22c), from the portable operating unit (20) and to transmit it to the safety control apparatus (10).

2. A safety locking device (1) according to claim 1,
**characterized in that**
the safety locking device (1) is configured to receive one or more executable commands (22a, 22b, 22c) from the safety control apparatus (10) and to contactlessly transmit them to the portable operating unit (20).

3. A safety locking device (1) according to claim 1 or 2,
**characterized in that**
the safety locking device (1) is configured to contactlessly receive authentication information from the portable operating unit (20) and to forward it to the safety control apparatus (10).

4. A safety locking device (1) according to any one of the preceding claims, **characterized in that**
the first radio module (7) is an NFC radio module.

5. A safety locking device (1) according to any one of the preceding claims, **characterized in that**
the safety locking device (1) comprises an RFID tag (8), with the first radio module (7) or a second radio module (9) of the safety locking device (1) being configured to receive data from the RFID tag (8) if the movable guard (4) is closed, and with the safety locking device (1) being configured to transmit the closed state of the movable guard (4) to the safety control apparatus (10).

6. An assembly (100) comprising the safety locking device (1) according to any one of the preceding claims and the safety control apparatus (10), **characterized in that**
the safety control apparatus (10) is configured to receive and to execute the selected command (22a, 22b, 22c), and **in that** the safety control apparatus (10) is further configured to transmit at least one currently executable command (22d) to the safety locking device (1) in dependence on the executed command (22a, 22b, 22c), with the safety locking device (1) being configured to contactlessly transmit this further currently executable command (22d) to the portable operating unit (20).

7. An assembly (100) according to claim 6,
**characterized in that**
the safety control apparatus (10) is configured to check a permissibility of the received selected command (22a, 22b, 22c), with the received selected command (22a, 22b, 22c) only being executed if it is permitted.

8. An assembly (100) according to claim 6 or 7,
**characterized in that**
the safety control apparatus (10) is configured to transmit different executable commands (22a, 22b, 22c) to the safety locking device (1) depending on the received authentication information of the portable operating unit (20), with the safety locking device (1) being configured to contactlessly transmit these respective possible executable commands (22a, 22b, 22c) to the portable operating unit (20).

9. An assembly (100) according to any one of the claims 6 to 8,
**characterized in that**
the assembly (100) comprises at least one portable operating unit (20), with the portable operating unit (20) being configured to contactlessly communicate with the safety locking device (1), and with the portable operating unit (20) further being configured to receive selectable commands (22a, 22b, 22c) from the safety locking device (1) and to present them to a user.

10. An assembly (100) according to claim 9,
**characterized in that**
the portable operating unit (20) is configured to detect a selection of a selectable command (22a, 22b, 22c) by an input of the user and to contactlessly transmit the selected command (22a, 22b, 22c) to the safety locking device (1).

11. An assembly (100) according to claim 9 or 10,
**characterized in that**
the portable operating unit (20) is configured to generate authentication information from the user and to contactlessly transmit this authentication information to the safety locking device (1).

12. An assembly (100) according to any one of the claims 6 to 11,
**characterized in that**
the assembly (100) has a door system (50), with the door system (50) comprising the safety locking device (1), and with the door system (50) comprising a main module (1a) having at least one pushbutton (16, 17) and a handle module (1b) having a door handle (15).

13. An assembly (100) according to claim 12,
**characterized in that**
the door system (50) and the safety control apparatus (10) are arranged in a common housing.

14. A method for safeguarding a machine (2) by means of a movable guard (4), **characterized by** the following method steps:
- coupling (S₁) a portable operating unit (20) to a safety locking device (1) or to a door system (50) comprising a safety locking device (1);
- transmitting (S₂) possible executable commands (22a, 22b, 22c) to the portable operating unit (20);
- transmitting (S₃) a command (22a, 22b, 22c) selected on the portable operating unit (20), from a plurality of selectable commands (22a, 22b, 22c), from the portable operating unit (20) to the safety locking device (1) or to the door system (50) comprising the safety locking device (1);
- transmitting (S₄) the selected command (22a, 22b, 22c) from the safety locking device (1) or from the door system (50) comprising the safety locking device (1) to a safety control apparatus (10);
- executing (S₅) the selected command (22a, 22b, 22c) by the safety control apparatus (10).

15. A method according to claim 14,
**characterized by** the following method steps:
- determining (S₆) which at least one command (22d) is currently executable after execution of the selected command (22a, 22b, 22c);
- transmitting (S₇) the at least one currently executable command (22d) to the safety locking device (1) or to the door system (50) comprising the safety locking device (1) by the safety control apparatus (10);
- transmitting the at least one currently executable command (22d) to the portable operating unit (20) by the safety locking device (1) or by the door system (50) comprising the safety locking device (1);
- presenting the at least one currently executable command (22d) by the portable operating unit (20).

## Revendications

1. Système d'interverrouillage de sécurité (1) pour un dispositif de protection (4) formant une séparation mobile et destiné à sécuriser une machine (2), le système d'interverrouillage de sécurité (1) étant conçu pour communiquer avec un dispositif de contrôle de sécurité (10), et le système d'interverrouillage de sécurité (1) comprenant au moins un premier module radio (7) pour la communication sans contact physique avec un appareil de commande portable (20),
**caractérisé en ce que**
le système d'interverrouillage de sécurité (1) est conçu pour recevoir sans contact physique une instruction (22a, 22b, 22c), sélectionnée sur l'appareil de commande portable (20) parmi une pluralité d'instructions sélectionnables (20), et pour la transmettre au dispositif de contrôle de sécurité (10).

2. Système d'interverrouillage de sécurité (1) selon la revendication 1,
**caractérisé en ce que**
le système d'interverrouillage de sécurité (1) est conçu pour recevoir une ou plusieurs instructions exécutables (22a, 22b, 22c) du dispositif de contrôle de sécurité (10) et pour les transmettre sans contact physique à l'appareil de commande portable (20).

3. Système d'interverrouillage de sécurité (1) selon la revendication 1 ou 2, **caractérisé en ce que**
le système d'interverrouillage de sécurité (1) est conçu pour recevoir sans contact physique une information d'authentification provenant de l'appareil de commande portable (20) et pour la transmettre au dispositif de contrôle de sécurité (10).

4. Système d'interverrouillage de sécurité (1) selon l'une des revendications précédentes,
**caractérisé en ce que**
le premier module radio (7) est un module radio NFC.

5. Système d'interverrouillage de sécurité (1) selon l'une des revendications précédentes,
**caractérisé en ce que**
le système d'interverrouillage de sécurité (1) comprend une étiquette RFID (8), le premier module radio (7) ou un deuxième module radio (9) du système d'interverrouillage de sécurité (1) étant conçu pour recevoir des données de l'étiquette RFID (8) lorsque le dispositif de protection (4) formant une séparation mobile est fermé, et le système d'interverrouillage de sécurité (1) étant conçu pour transmettre au dispositif de contrôle de sécurité (10) l'état fermé du dispositif de protection (4) formant une séparation mobile.

6. Ensemble (100) constitué du système d'interverrouillage de sécurité (1) selon l'une des revendications précédentes et du dispositif de contrôle de sécurité (10),
**caractérisé en ce que**
le dispositif de contrôle de sécurité (10) est conçu pour recevoir et exécuter l'instruction sélectionnée (22a, 22b, 22c), et
**en ce que** le dispositif de contrôle de sécurité (10) est en outre conçu pour transmettre au moins une instruction actuellement exécutable (22d) au système d'interverrouillage de sécurité (1) en fonction de l'instruction exécutée (22a, 22b, 22c), le système d'interverrouillage de sécurité (1) étant conçu pour transmettre sans contact physique cette autre instruction actuellement exécutable (22d) à l'appareil de commande portable (20).

7. Ensemble (100) selon la revendication 6,
**caractérisé en ce que**
le dispositif de contrôle de sécurité (10) est conçu pour vérifier une admissibilité de l'instruction sélectionnée reçue (22a, 22b, 22c), l'instruction sélectionnée reçue (22a, 22b, 22c) n'étant exécutée que si elle est admissible.

8. Ensemble (100) selon la revendication 6 ou 7,
**caractérisé en ce que**
le dispositif de contrôle de sécurité (10) est conçu pour transmettre différentes instructions exécutables (22a, 22b, 22c) au système d'interverrouillage de sécurité (1) en fonction des informations d'authentification reçues de l'appareil de commande portable (20), le système d'interverrouillage de sécurité (1) étant conçu pour transmettre sans contact physique ces instructions exécutables possibles respectives (22a, 22b, 22c) à l'appareil de commande portable (20).

9. Ensemble (100) selon l'une des revendications 6 à 8,
**caractérisé en ce que**
ledit ensemble (100) comprend au moins un appareil de commande portable (20), l'appareil de commande portable (20) étant conçu pour communiquer sans contact physique avec le système d'interverrouillage de sécurité (1), et l'appareil de commande portable (20) étant en outre conçu pour recevoir des instructions sélectionnables (22a, 22b, 22c) du système d'interverrouillage de sécurité (1) et pour les présenter à un utilisateur.

10. Ensemble (100) selon la revendication 9,
**caractérisé en ce que**
l'appareil de commande portable (20) est conçu pour détecter une sélection d'une instruction sélectionnable (22a, 22b, 22c) par une entrée de l'utilisateur et pour transmettre sans contact physique l'instruction sélectionnée (22a, 22b, 22c) au système d'interverrouillage de sécurité (1).

11. Ensemble (100) selon la revendication 9 ou 10,
**caractérisé en ce que**
l'appareil de commande portable (20) est conçu pour établir une information d'authentification de l'utilisateur et pour transmettre sans contact physique cette information d'authentification au système d'interverrouillage de sécurité (1).

12. Ensemble (100) selon l'une des revendications 6 à 11,
**caractérisé en ce que**
ledit ensemble (100) comprend un système de porte (50), le système de porte (50) comprenant le système d'interverrouillage de sécurité (1) et le système de porte (50) comprenant un module principal (1a) avec au moins une touche (16, 17) et un module de poignée (1b) avec une poignée de porte (15).

13. Ensemble (100) selon la revendication 12,
**caractérisé en ce que**
le système de porte (50) et le dispositif de contrôle de sécurité (10) sont disposés dans un boîtier commun.

14. Procédé de sécurisation d'une machine (2) au moyen d'un dispositif de protection (4) formant une séparation mobile,
**caractérisé par** les étapes de procédé suivantes consistant à :
- coupler (S₁) un appareil de commande portable (20) avec un système d'interverrouillage de sécurité (1) ou avec un système de porte (50) muni d'un système d'interverrouillage de sécurité (1) ;
- transmettre (S₂) des instructions exécutables possibles (22a, 22b, 22c) à l'appareil de commande portable (20) ;
- transmettre (S₃) une instruction (22a, 22b, 22c), sélectionnée sur l'appareil de commande portable (20) parmi plusieurs instructions sélectionnables (20), depuis l'appareil de commande portable (20) au système d'interver-rouillage de sécurité (1) ou au système de porte (50) muni du système d'in-terverrouillage de sécurité (1) ;
- transmettre (S₄) l'instruction sélectionnée (22a, 22b, 22c) du système d'in-terverrouillage de sécurité (1) ou du système de porte (50) muni du système d'interverrouillage de sécurité (1) à un dispositif de contrôle de sécurité (10) ;
- exécuter (S₅) l'instruction sélectionnée (22a, 22b, 22c) par le dispositif de contrôle de sécurité (10).

15. Procédé selon la revendication 14,
**caractérisé par** les étapes de procédé suivantes consistant à :
- déterminer (S₆) quelle au moins une instruction (22d) est actuellement exécutable après l'exécution de l'instruction sélectionnée (22a, 22b, 22c) ;
- transmettre (S₇) ladite au moins une instruction actuellement exécutable (22d) au système d'interverrouillage de sécurité (1) ou au système de porte (50) muni du système d'interverrouillage de sécurité (1) par le dispositif de contrôle de sécurité (10) ;
- transmettre ladite au moins une instruction actuellement exécutable (22d) à l'appareil de commande portable (20) par le système d'interverrouillage de sécurité (1) ou par le système de porte (50) muni du système d'interver-rouillage de sécurité (1) ;
- représenter ladite au moins une instruction actuellement exécutable (22d) par l'appareil de commande portable (20).
